# EUROPEAN PATENT APPLICATION

(11) **EP 3 386 066 A1**
(43) Date of publication of application: **10.10.2018**
(21) Application number: 16870894.9
(22) Date of filing: 08.09.2016
(51) Int. Cl.: H02J 7/02, H02J 7/04

(54) **WIRELESS CHARGING DEVICE, WIRELESS POWER TRANSMISSION METHOD THEREFOR, AND RECORDING MEDIUM FOR SAME**

(30) Priority: 03.12.2015 KR 20150171427
(71) Applicant: LG Innotek Co., Ltd., Seoul 04637 (KR)
(72) Inventor: LEE, Yun Bok, Seoul 04637 (KR); JO, Min Young, Seoul 04637 (KR); LIM, Hyung Jun, Seoul 04637 (KR)
(74) Representative: DREISS Patentanwälte PartG mbB
(86) International application number: PCT/KR2016/010078
(87) International publication number: WO 2017/094997

(57) **Abstract**

A wireless power transmitter according to an embodiment comprises: a power conversion unit for converting the strength of supplied power and outputs the same as a power signal; a transmission control unit for inspecting whether a wireless power receiver proceeds with charging in a no-load state without completing the charging, and according to the result of inspection, temporarily stopping the supply of the power signal to the wireless power receiver and resuming the supply; and a transmission coil end which has at least one transmission coil for transmitting the power signal to the wireless power receiver.

## Description

### [Technical Field]

Embodiments relate to a wireless charging device, a wireless power transmission method therefor, and a recording medium for the same.

### [Background Art]

Recently, as information and communication technology rapidly develops, a ubiquitous society based on information and communication technology is being formed.

To allow information communication devices to be connected anytime and anywhere, sensors equipped with a computer chip having a communication function should be installed in all facilities. Therefore, supply of power to these devices or sensors is a new challenge. In addition, as the kinds of portable devices such as Bluetooth handsets and music players like iPods, as well as mobile phones, rapidly increase in number, charging batteries thereof has required time and effort. As a way to address this issue, wireless power transmission technology has recently drawn attention.

Wireless power transmission (or wireless energy transfer) is a technology for wirelessly transmitting electric energy from a transmitter to a receiver based on the induction principle of a magnetic field. In the 1800s, electric motors or transformers based on electromagnetic induction began to be used. Thereafter, a method of transmitting electric energy by radiating a high frequency wave or an electromagnetic wave, such as a microwave or laser, was tried. For example, electric toothbrushes and some wireless shavers are charged through electromagnetic induction.

Wireless energy transmission techniques introduced up to now may be broadly divided into magnetic induction, electromagnetic resonance, and RF transmission employing a short wavelength radio frequency.

In the magnetic induction scheme, when two coils are arranged adjacent each other and current is applied to one of the coils, a magnetic flux generated at this time generates electromotive force in the other coil. This technology is being commercialized mainly for small devices such as mobile phones. In the electromagnetic induction scheme, power of up to several hundred kilowatts (kW) may be transmitted with high efficiency, but the maximum transmission distance is less than or equal to 1 cm. As a result, devices are generally required to be placed adjacent to a charger or a pad, which is disadvantageous.

The magnetic resonance scheme uses an electric field or a magnetic field instead of employing an electromagnetic wave or current. The magnetic resonance scheme is advantageous in that the scheme is safe for other electronic devices or the human body since it is hardly influenced by the electromagnetic waves. However, the distance and space available for this scheme are limited, and the energy transfer efficiency of the scheme is rather low.

The short-wavelength wireless power transmission scheme (i.e., the RF transmission scheme) takes advantage of the fact that energy can be transmitted and received directly in the form of radio waves. This technique is an RF-based wireless power transmission scheme using a rectenna. A rectenna, which is a compound word of antenna and rectifier, refers to a device that converts RF power directly into direct current (DC) power. That is, the RF scheme is a technique of converting AC radio waves into DC waves. Recently, with improvement in efficiency, commercialization of RF technology has been actively researched.

The wireless power transmission technique is employable in various industries including IT, railroads, and home appliances as well as the mobile industry.

The battery of the receiver may be charged with power wirelessly transmitted from the transmitter. At this time, if the temperature of the battery of the receiver is higher than or equal to a predetermined temperature, the power supplied to the battery is interrupted to protect the battery. However, the transmitter may continue to transmit power, recognizing that the receiver continues to be charged. Thereby, power may be consumed unnecessarily. In addition, charging may not be performed for a long time as the power supplied to the battery is interrupted to protect the battery.

### [Disclosure]

### [Technical Problem]

Embodiments provide a wireless power transmission apparatus capable of preventing power from being unnecessarily consumed by continuing charging in a no-load state when battery charging is interrupted as overheating is detected in a receiver, a wireless power transmission method therefor, and a recording medium for the same.

### [Technical Solution]

In one embodiment, a wireless power transmitter for wirelessly transmitting a power signal to a wireless power receiver may include a power conversion unit configured to convert an intensity of a supplied power and output the power as the power signal, a transmission controller configured to check whether the wireless power receiver proceeds with charging in a no-load state without completing the charging and to temporarily interrupt and then resume supply of the power signal to the wireless power receiver according to a result of the checking, and a transmission coil group having at least one transmission coil configured to transmit the power signal to the wireless power receiver.

For example, the wireless power transmitter may repeat the operation of temporarily interrupting and then resuming the supply of the power signal to the wireless power receiver a plurality of times under control of the transmission controller.

For example, the wireless power transmitter may further include a frequency driver, and a demodulation unit configured to demodulate a feedback signal transmitted from the wireless power receiver and received through the transmission coil group, wherein the transmission controller may control the frequency driver according to the feedback signal demodulated by the demodulation unit to change a frequency of the power signal to be transferred to the transmission coil group.

For example, the power conversion unit may include a level conversion unit configured to convert a level of the supplied power, and a power sensor configured to measure a voltage/current of the supplied power having the converted level, wherein the transmission controller may interrupt supply of the supplied power to the level conversion unit according to a result of the measurement by the power sensor.

For example, the wireless power transmitter may further include a first sensor configured to measure a level of a rail current flowing from the level conversion unit to the power sensor, a second sensor configured to measure a level of a coil current flowing through a transmission coil wirelessly connected to the wireless power receiver in the transmission coil group, and a comparison unit configured to compare results of the measurement performed by the first and second sensors, wherein the transmission controller may check whether the wireless power receiver proceeds with the charging in the no-load state, using a result of the comparison performed the comparison unit.

For example, the transmission controller may analyze the demodulated feedback signal to determine at least one of whether a charge rate lower than full charge of the wireless power receiver is kept constant for a first predetermined time or whether a charging completion signal is not received from the wireless power receiver for a second predetermined time, and may check whether the wireless power receiver proceeds with the charging in the no-load state, using a result of the determination.

For example, the wireless power transmitter may further include a temperature measurement unit configured to measure a temperature of the wireless power transmitter, wherein the transmission controller may check whether the temperature measured by the temperature measurement unit is maintained within an upper limit threshold range for a predetermined time and check whether the wireless power receiver proceeds with the charging in the no-load state according to a result of the checking.

In another embodiment, a wireless power receiver for wirelessly receiving a power signal from a wireless power transmitter may include a reception coil coupled to a corresponding transmission coil in the transmission coil group by an electromagnetic field, a modulation unit configured to modulate the feedback signal to be transmitted to the wireless power transmitter via the reception coil, a rectification unit configured to rectify the power signal received via the reception coil and provide the rectified power signal to a charging object, and a reception controller configured to control the rectification unit to interrupt supply of the power signal to the charging object to proceed with charging in the no-load state when a temperature of the charging object is higher than a temperature limit and to generate the feedback signal.

For example, the reception controller may generate the feedback signal containing information about at least one of a charge rate of the charging object, a required time for charging, or whether the charging is completed.

In another embodiment, a method of wirelessly transmitting power from a wireless power transmitter to a wireless power receiver may include converting an intensity of a supplied power and generating a power signal, and temporarily interrupting and then resuming supply of the power signal when the wireless power receiver proceeds with charging in a no-load state without completing the charging.

For example, checking of whether the charging is performed in the no-load state may include determining that the wireless power receiver proceeds with the charging in the no-load state when at least two conditions are satisfied among a condition that a coil current is larger than a rail current, a condition that a charge rate lower than full charge of the wireless power receiver is kept constant for a first predetermined time, a condition that a charging completion signal is not received from the wireless power receiver for a second predetermined time, or a condition that a temperature of the wireless power transmitter is maintained within an upper limit threshold range for a predetermined time.

For example, when the coil current is larger than the rail current and the charging completion signal is not received for at least several hours, it may be determined that the wireless power receiver proceeds with the charging in the no-load state without completing the charging.

For example, the upper limit threshold range of the temperature of the wireless power transmitter may be between 65° and 75°.

In another embodiment, a computer-readable recording medium may have recorded thereon a program for executing the method.

### [Advantageous Effects]

With a wireless charging device, a wireless power transmission method therefor, and a recording medium for the same according to embodiments may perform, at least once, the operation of resuming charging after temporarily interrupting supply of power to a wireless power receiver when it is recognized that charging is performed in a no-load state without the wireless power receiver being fully charged. Thereby, power consumed by unnecessary supply of power to the wireless power receiver while the wireless power receiver is not being charged may be reduced, and the wireless power receiver may be charged quickly.

### [Description of Drawings]

The accompanying drawings, which are included to provide a further understanding of the disclosure, illustrate embodiments of the disclosure. It is to be understood, however, that the technical features of the present disclosure are not limited to specific drawings, and the features disclosed in the drawings may be combined with each other to constitute a new embodiment.
FIG. 1 is a state transition diagram illustrating a wireless power transmission procedure defined in the WPC standard.
FIG. 2 is a state transition diagram illustrating a wireless power transmission procedure defined in the PMA standard.
FIG. 3 is a block diagram illustrating a wireless power transmitter according to an embodiment.
FIGs. 4A and 4B are graphs for comparing a coil current with a rail current.
FIG. 5 is a block diagram illustrating a wireless power receiver capable of receiving power from the wireless power transmitter according to FIG. 4.
FIG. 6 is a flowchart illustrating a wireless power transmission method according to an embodiment.
FIGs. 7A and 7B are graphs depicting a control operation of a wireless power transmitter according to a comparative example when the wireless power receiver proceeds with charging in a no-load state without completing charging.
FIGs. 8A and 8B are graphs depicting a control operation of a wireless power transmitter according to an embodiment when the wireless power receiver proceeds with charging in a no-load state without completing charging.
FIG. 9 is a schematic block diagram illustrating a vehicle associated with a wireless power transmitter according to an embodiment.

### [Best Mode]

Hereinafter, an apparatus and various methods to which embodiments of the present disclosure are applied will be described in detail with reference to the drawings. As used herein, the suffixes "module" and "unit" are added or interchangeably used to facilitate preparation of this specification and are not intended to suggest distinct meanings or functions.

In the description of the embodiments, it is to be understood that, when an element is described as being "on"/"over" or "beneath"/"under" another element, the two elements may directly contact each other or may be arranged with one or more intervening elements present therebetween. Also, the terms "on"/"over" or "beneath"/"under" may refer to not only an upward direction but also a downward direction with respect to one element.

For simplicity, in the description of the embodiments, "wireless power transmitter," "wireless power transmission apparatus," "transmission terminal," "transmitter," "transmission apparatus," "transmission side," "wireless power transfer apparatus," "wireless power transferer," and the like will be interchangeably used to refer to an apparatus for transmitting wireless power in a wireless power system. In addition, "wireless power reception apparatus," "wireless power receiver," "reception terminal," "reception side," "reception apparatus," "receiver," and the like will be used interchangeably to refer to an apparatus for receiving wireless power from a wireless power transmission apparatus.

The transmitter according to an embodiment may be configured as a pad type, a cradle type, an access point (AP) type, a small base station type, a stand type, a ceiling embedded type, a wall-mounted type, or the like. One transmitter may transmit power to a plurality of wireless power reception apparatuses.

A transmitter according to an embodiment may include at least one wireless power transmission means. Here, the wireless power transmission means may employ various wireless power transmission standards which are based on the electromagnetic induction scheme for charging according to the electromagnetic induction principle meaning that a magnetic field is generated in a power transmission terminal coil and current is induced in a reception terminal coil by the magnetic field. Here, the wireless power transmission means may include wireless charging technology using electromagnetic induction schemes defined by the Wireless Power Consortium (WPC), the Power Matters Alliance (PMA), and Alliance for Wireless Power (A4WP), which are wireless charging technology standard organizations.

In addition, a receiver according to an embodiment may include at least one wireless power reception means, and may receive wireless power from two or more transmitters simultaneously. Here, the wireless power reception means may include wireless charging technologies of electromagnetic induction schemes defined by the Wireless Power Consortium (WPC), the Power Matters Alliance (PMA), and the Alliance for Wireless Power (A4WP), which are wireless charging technology standard organizations.

The receiver according to an embodiment may be employed in small electronic devices including a mobile phone, a smartphone, a laptop computer, a digital broadcasting terminal, a PDA (Personal Digital Assistant), a PMP (Portable Multimedia Player), a navigation device, an electric toothbrush, an electronic tag, a lighting device, a remote control, a fishing float, and wearable devices such as a smart watch. However, the embodiments are not limited thereto. The applications may include any devices which are equipped with a wireless power transmission means and have a rechargeable battery.

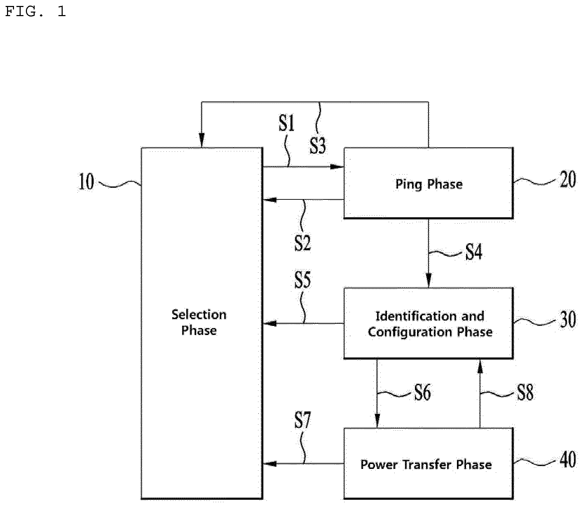

FIG. 1 is a state transition diagram illustrating a wireless power transmission procedure defined in the WPC standard.

Referring to FIG. 1, power transmission from a transmitter to a receiver according to the WPC standard is broadly divided into a selection phase 10, a ping phase 20, an identification and configuration phase 30, and a power transfer phase 40.

The selection phase 10 may be a phase in which transition occurs when a specific error or a specific event is detected while power transmission begins or is maintained. Here, the specific error and the specific event will be clarified through the following description. Further, in the selection phase 10, the transmitter may monitor whether an object is present at the interface surface. When the transmitter detects an object being placed on the interface surface, it may transition to the ping phase 20 (S1). In the selection phase 10, the transmitter may transmit an analog ping signal of a very short pulse and sense whether there is an object in the active area of the interface surface based on the change in current of the transmission coils.

When the transmitter detects an object in the ping phase 20, it activates the receiver and transmits a digital ping to identify whether the receiver is a WPC standard-compatible receiver. If the transmitter does not receive a response signal (e.g., a signal strength indicator) for the digital ping from the receiver in the ping phase 20, it may transition back to the selection phase 10 (S2). In addition, if the transmitter receives, from the receiver, a signal indicating completion of power transmission (hereinafter, an end of charge (EPT) signal), the transmitter may transition to the selection phase 10 (S3).

Once the ping phase 20 is complete, the transmitter may transition to the identification and configuration phase 30 for identifying the receiver and collecting configuration and state information about the receiver (S4).

In the identification and configuration phase 30, the transmitter may transition to the selection phase 10 if an unexpected packet is received, a desired packet is not received for a predefined time (timeout), there is a packet transmission error, or no power transfer contract is made (S5) .

Once identification and configuration of the receiver are complete, the transmitter may transition to the power transfer phase 40, in which the transmitter transmits wireless power (S6).

In the power transfer phase 40, the transmitter may transition to the selection phase 10 if an unexpected packet is received, a desired packet is not received for a predefined time (timeout), violation of a pre-established power transmission contract occurs (power transfer contract violation), or charging is complete (S7).

In addition, in the power transfer phase 40, if the power transfer contract needs to be reconfigured due to change in the state of the transmitter or the like, the transmitter may transition to the identification and configuration phase 30 (S8).

The above-mentioned power transfer contract may be set based on the state and characteristics information about the transmitter and the receiver. For example, the transmitter state information may include information on a maximum amount of transmittable power and information on a maximum number of acceptable receivers, and the receiver state information may include information on the required power.

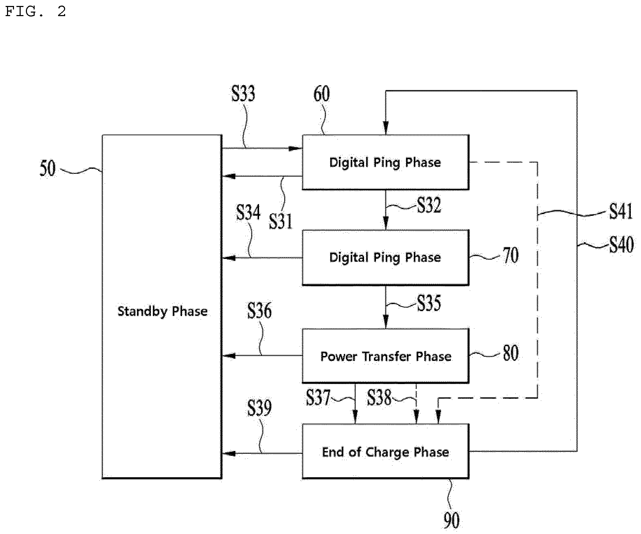

FIG. 2 is a state transition diagram illustrating a wireless power transmission procedure defined in the PMA standard.

Referring to FIG. 2, power transmission from a transmitter to a receiver according to the PMA standard is broadly divided into a Standby phase 50, a Digital Ping phase 60, an Identification phase 70, a Power Transfer phase 80, and an End of Charge phase 90.

The Standby phase 50 may be a phase for performing transition when a specific error or a specific event is detected while a receiver identification procedure for power transmission is performed or power transmission is maintained. Here, the specific error and the specific event will be clarified through the following description. In addition, in the Standby phase 50, the transmitter may monitor whether an object is present on a charging surface. When the transmitter detects an object being placed on the charging surface or an RXID retry is in progress, it may transition to the Digital Ping phase 60 (S31). Here, RXID is a unique identifier assigned to a PMA-compatible receiver. In the Standby phase 50, the transmitter may transmit an analog ping very short pulse, and sense, based on the change in current of the transmission coil, whether there is an object in the active area of the interface surface (for example, the charging bed).

Upon transitioning to the Digital Ping phase 60, the transmitter sends a digital ping signal to identify whether the detected object is a PMA-compatible receiver. When sufficient power is supplied to the reception terminal by the digital ping signal transmitted by the transmitter, the receiver may modulate the received digital ping signal according to the PMA communication protocol and transmit a predetermined response signal to the transmitter. Here, the response signal may include a signal strength indicator indicating the strength of the power received by the receiver. When a valid response signal is received in the Digital Ping phase 60, the receiver may transition to the Identification phase 70 (S32).

If the response signal is not received or it is determined that the receiver is not a PMA-compatible receiver (i.e., Foreign Object Detection (FOD)) in the Digital Ping phase 60, the transmitter may transition to the Standby phase 50 (S33). As an example, a foreign object (FO) may be a metallic object including a coin and a key.

In the Identification phase 70, the transmitter may transition to the Standby phase 50 if the receiver identification procedure fails or needs to be re-performed and if the receiver identification procedure is not completed in a predefined time (S34).

If the transmitter succeeds in identifying the receiver, the transmitter may transition from the Identification phase 70 to the Power Transfer phase 80 and initiate charging (S35).

In the Power Transfer phase 80, the transmitter may transition to the Standby phase 50 if a desired signal is not received within a predetermined time (timeout), a foreign object (FO) is detected, or the voltage of the transmission coil exceeds a predefined reference value (S36).

In addition, in the Power Transfer phase 80, the transmitter may transition to the End of Charge phase 90 if the temperature detected by a temperature sensor provided in the transmitter exceeds a predetermined reference value (S37).

In the End of Charge phase 90, if the transmitter determines that the receiver has been removed from the charging surface, the transmitter may transition to the Standby state 50 (S39).

In addition, if a temperature measured in the over-temperature state after lapse of a predetermined time drops below a reference value, the transmitter may transition from the End of Charge phase 90 to the Digital Ping phase 60 (S40).

In the Digital Ping phase 60 or the Power Transfer phase 80, the transmitter may transition to the End of Charge phase 90 when an End of Charge (EOC) request is received from the receiver (S38 and S41).

Hereinafter, a wireless charging device according to an embodiment will be described with reference to the accompanying drawings. Here, the wireless charging device means a device including both the transmitter and the receiver described above. The transmitter and the receiver described above are referred to as a wireless power transmitter and a wireless power receiver, respectively. Hereinafter, a wireless power transmitter 100 and a wireless power receiver 200 according to an embodiment will be described with reference to the accompanying drawings.

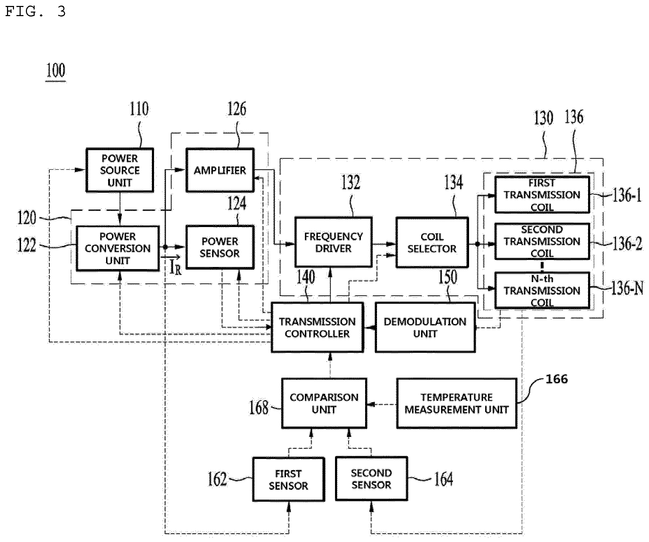

FIG. 3 is a block diagram illustrating a wireless power transmitter 100 according to an embodiment. For ease of understanding, flow of power (or a power signal) is indicated by a solid line and flows of a control signal and a state signal other than the power are indicated by a dotted line.

Referring to FIG. 3, the wireless power transmitter 100 may include a power source unit 110, a power conversion unit 120, a power transmission unit 130, a transmission controller 140, a demodulation unit 150, first and second sensors 162 and 164, a temperature measurement unit 166, and a comparison unit 168. The elements of the wireless power transmitter 100 are not necessarily essential elements, and thus the wireless power transmitter 100 according to an embodiment may include more or fewer elements than the elements shown in FIG. 3.

The power source unit 110 serves to supply power, and may correspond to a battery installed in the wireless power transmitter 100 or an external power source. Embodiments are not limited to the form of the power source unit 110.

When power is supplied from the power source unit 110, the power conversion unit 120 may convert the power into power having a predetermined intensity and output a power signal to the power transmission unit 130 as a result of conversion. To this end, the power conversion unit 120 may include a level conversion unit 122, a power sensor 124, and an amplifier 126.

The level conversion unit 122 converts the level of the power supplied from the power source unit 110 and outputs a signal having the converted level as a power signal. For example, the level conversion unit 122 may include a DC/DC converter such as a buck converter, but embodiments are not limited to the configuration of the level conversion unit 122. The DC/DC converter may function to convert DC power supplied from the power source unit 110 into DC power having a predetermined intensity according to a control signal generated by the transmission controller 140.

The power sensor 124 measures the voltage/current of the power signal with the converted level from the level conversion unit 122. Specifically, the power sensor 124 may measure the voltage/current of the DC power signal output from the level conversion unit 122 and provide the measured voltage/current to the transmission controller 140.

The amplifier 126 may amplify (or adjust) the intensity of the power signal having the level converted by the level conversion unit 122 according to a control signal generated by the transmission controller 140. For example, the transmission controller 140 may receive the power control signal (or a feedback signal) provided from the wireless power receiver via the demodulation unit 160, and adjust an amplification factor of the amplifier 150 according to the received power control signal.

The transmission controller 140 may control at least one of the power source unit 110 or the amplifier 126 based on the voltage/current value measured by the power sensor 124. That is, the transmission controller 140 may adaptively interrupt supply of power from the power source unit 110 to the level conversion unit 122, or block a power signal from being supplied to the amplifier 126 or from being output from the amplifier 126. To this end, although not shown in the drawings, a power interruption circuit to interrupt supply of power from the power source unit 110, supply of a power signal to the amplifier 126, or supply of a power signal from the amplifier 126 to the power transmission unit 130 may be disposed on one side of the power conversion unit 120.

The power transmission unit 130 may function to transmit the power signal output from the power conversion unit 120 to the wireless power receiver. To this end, the power transmission unit 130 may include a frequency driver 132, a coil selector 134, and a transmission coil group 136. For convenience, the transmission controller 140 and the demodulation unit 150 are shown as constituent elements which are not included in the power transmission unit 130, but embodiments are not limited thereto. That is, the transmission controller 140 and the demodulation unit 150 may be constituent elements of the power transmission unit 130.

The frequency driver 132 may function to generate an AC power signal by inserting an AC component having a specific frequency into a DC power signal output from the power conversion unit 120 and transmit the generated AC power signal to the transmission coil group 136. At this time, the frequencies of the AC power signal transmitted to a plurality of transmission coils included in the transmission coil group 136 may be the same or different from each other.

The coil selector 134 may receive an AC power signal having a specific frequency from the frequency driver 132 and transmit the AC power signal to a transmission coil selected from among a plurality of transmission coils. Here, the coil selector 134 may control the AC power signal to be transmitted to the transmission coil selected by the transmission controller 140 according to a predetermined control signal of the transmission controller 140.

The transmission coil group 136 may include at least one transmission coil 136-1, 136-2,..., 136-N and may transmit, to the receiver, the AC power signal received from the coil selector 134 through the corresponding transmission coil. Here, N may be a positive integer greater than or equal to 1.

In order to select the "corresponding transmission coil" from among the plurality of transmission coils, the coil selector 134 may be implemented as a switch or a multiplexer. Here, the "corresponding transmission coil" may mean a transmission coil having a mode for coupling, through the electromagnetic field, to the reception coil of the wireless power receiver authorized to wirelessly receive power. According to one embodiment, the transmission controller 140 may dynamically select a transmission coil to be used for wireless power transmission among the plurality of provided transmission coils, based on a signal strength indicator received in response to a digital ping signal transmitted for each transmission coil.

When a feedback signal is transmitted from the wireless power receiver and is detected through the transmission coil group 136, the demodulation unit 150 demodulates the detected feedback signal and outputs the demodulated feedback signal to the transmission controller 140. Here, the demodulated feedback signal may include a signal control indicator, an error correction (EC) indicator for power control during wireless power transmission, an EOC (end of charge) indicator, and an overvoltage/overcurrent indicator, but embodiments are not limited thereto. The demodulated feedback signal may include various kinds of state information for identifying the state of the wireless power receiver.

In addition, according to an embodiment, the feedback signal may include information about the state of the charging process of the wireless power receiver or the charging result, for example, information about at least one of whether or not charging of the wireless power receiver is completed, the charge rate or the time required for charging.

In addition, the demodulation unit 150 may identify the transmission coil through which the demodulated signal has been received among the plurality of transmission coils 136-1 to 136-N included in the transmission coil group 136 and provide the transmission controller 140 with a predetermined transmission coil identifier corresponding to the identified transmission coil.

The transmission controller 140 outputs a control signal for controlling the frequency driver 132 according to the feedback signal demodulated by the demodulation unit 150. The frequency driver 132 may change the frequency of the power signal to be transmitted to the transmission coil group 136, in response to the control signal generated by the transmission controller 140. For example, when the wireless power transmitter 100 performs in-band communication with the wireless power receiver, the transmission controller 140 may transmit a predetermined control signal to the wireless power receiver through frequency modulation.

As described above, the wireless power transmitter 100 may not only transmit wireless power using the transmission coil group 136, but also exchange various information with the wireless power receiver via the transmission coil group 136. However, embodiments are not limited thereto. That is, according to another embodiment, the wireless power transmitter 100 may have a separate coil corresponding to each transmission coil of the transmission coil group 136, and uses the separate coil to perform in-band communication with the wireless power receiver.

Alternatively, the wireless power transmitter 100 may exchange information with the receiver using a separate channel rather than a feedback signal via the transmission coil group 136. That is, the wireless power transmitter 100 may communicate with the receiver using a separate communication means such as Bluetooth, NFC, Zigbee, etc., separate from the transmission coil group 136 for wireless power transmission. In this case, the communication for exchange of information with the receiver may use a frequency band different from the frequency for wireless power transmission. In the case where a separate communication channel is used as described above, the demodulation unit 150 may be omitted.

In addition, according to an embodiment, the transmission controller 140 checks whether charging is in progress in the no-load state while charging of the battery is not completed and supply of power to the battery is interrupted due to overheating.

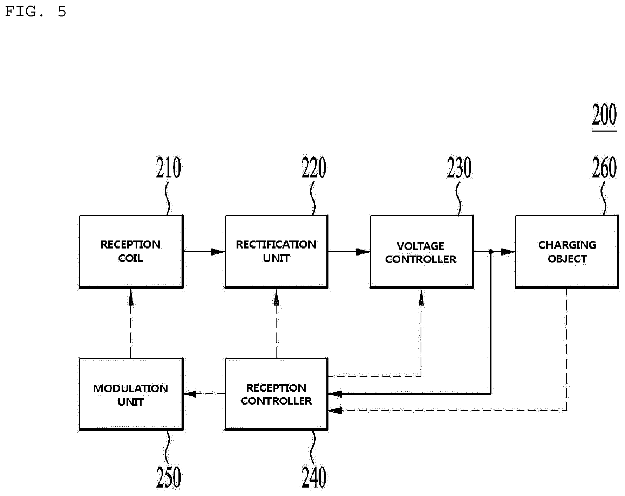

As described below in FIG. 5, the wireless power receiver may receive power wirelessly transmitted from the wireless power transmitter 100 and charge a charging object (or a load such as, for example, a battery). When the charging object is fully charged, the wireless power receiver may interrupt power such that the power is not supplied to the charging object any more. However, even if power is not provided to the charging object, the wireless power receiver may be supplied with a low level of power from the wireless power transmitter. Thus, when charging of the charging object is complete, the wireless power receiver may proceed with charging in the no-load state.

In addition, the wireless power receiver may interrupt supply of power to the charging object when necessary. For example, if the temperature of the charging object is high, for example, if the temperature is 40°C while charging the charging object with power is not completed, the wireless power receiver may interrupt supply of power to the charging object. As described above, the wireless power receiver may proceed with charging in the no-load state even when charging of the charging object has not been completed.

Considering the above two cases, the "situation in which the wireless power receiver performs charging in the no-load state" may mean a "situation in which power supply to the charging object in the wireless power receiver is interrupted". However, embodiments are not limited thereto.

In the meantime, the wireless power transmitter 100 according to an embodiment may recognize whether or not the wireless power receiver is performing charging in the no-load state without completing charging, by checking whether at least two of the following four conditions are satisfied.

As a first condition, the transmission controller 140 may check whether a coil current I_{C} is larger than a rail current I_{R}.

The rail current I_{R} may refer to a current flowing from the level conversion unit 122 to the power sensor 124. The coil current may refer to a current flowing through the "corresponding transmission coil" among a plurality of transmission coils included in the transmission coil group 136.

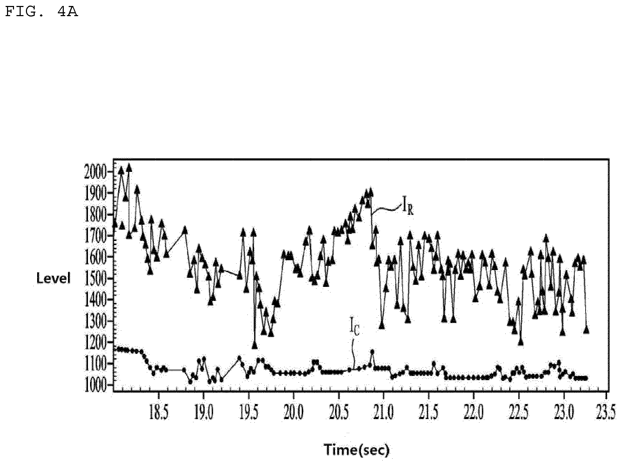

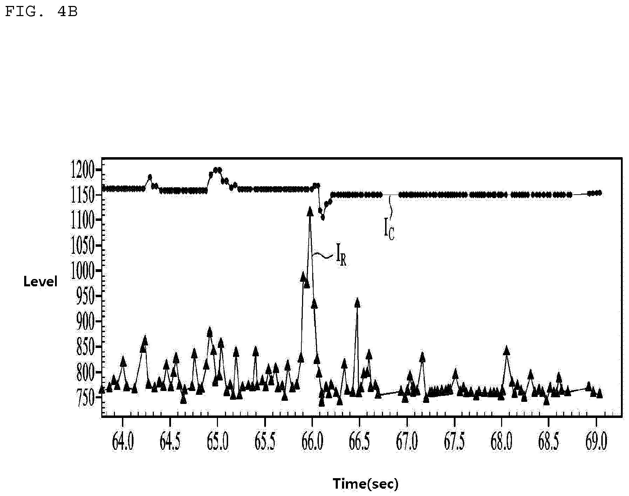

FIGs. 4A and 4B are graphs for comparing a coil current I_{C} with a rail current I_{R}, in which the horizontal axis represents time and the vertical axis represents level.

In general, when charging is in progress in the wireless power receiver without being completed, the rail current maintains a value greater than that of the coil current as shown in FIG. 4A. However, when charging is completed in the wireless power receiver, the coil current becomes larger than the rail current as shown in FIG. 4B. Thus, the coil current may be larger than the rail current in a situation where charging is performed in the wireless power receiver in the no-load state.

To meet the first condition described above, the wireless power transmitter 100 may include first and second sensors 162 and 164 and a comparison unit 168. The first sensor 162 is connected between the level conversion unit 122 and the power sensor 124, and thus measures the level of the rail current and outputs the result of measurement to the comparison unit 168. The second sensor 164 measures the level of the coil current flowing through the "corresponding transmission coil" in the transmission coil group 136 and outputs the result of measurement to the comparison unit 168.

The comparison unit 168 compares the level of the rail current measured by the first sensor 162 with the level of the coil current measured by the second sensor 164 and outputs the result of comparison to the transmission controller 140.

The transmission controller 140 may determine whether the coil current is larger than the rail current by using the result of comparison obtained by the comparison unit 168.

As a second condition, the transmission controller 140 may check whether the charge rate of the wireless power receiver is kept constant for a first predetermined time.

The charge rate of the charging object included in the wireless power receiver may be predetermined. Therefore, the transmission controller 140 may check whether the charge rate is kept constant at a predetermined charge rate for a first predetermined time without the charging object being fully charged.

For example, the operation according to the second condition described above may be performed when the first condition is satisfied, or may be performed regardless of whether or not the first condition is satisfied.

When the operation according to the second condition is performed when the first condition is satisfied, having the coil current larger than the rail current generally corresponds to a case where charging the wireless power receiver is completed as described above. Nevertheless, if the charge rate of the charging object is kept unchanged without the charging object fully charged for the first predetermined time, the transmission controller 140 may determine that the wireless power receiver is performing charging in the no-load state.

The transmission controller 140 may use a feedback signal transmitted from the wireless power receiver to check the charge rate of the charging object of the wireless power receiver, but embodiments are not limited thereto.

As a third condition, the transmission controller 140 may check whether a charging completion signal has not been received from the wireless power receiver for a second predetermined time. Here, the second predetermined time may be, for example, one hour, but embodiments are not limited thereto.

When charging of the charging object included in the wireless power receiver is completed, the wireless power receiver may transmit an indication of the end of charge to the wireless power transmitter. The second predetermined time required for charging the charging object included in the wireless power receiver may be predetermined. Accordingly, the transmission controller 140 may check whether a charging completion signal has not been transmitted from the wireless power receiver for the second predetermined time.

For example, the operation according to the third condition described above may be performed when the first condition is satisfied. In this case, having the coil current larger than the rail current generally corresponds to a case where charging of the wireless power receiver is completed as described above. Nevertheless, if a predetermined control signal indicating that charging is completed is not received from the wireless power receiver by the wireless power transmitter for the second predetermined time, the transmission controller 140 may determine that charging is in progress in the no-load state without charging of the wireless power receiver being completed.

The information indicating that charging of the wireless power receiver is completed may be transmitted from the wireless power receiver to the wireless power transmitter via a feedback signal.

The transmission controller 140 may perform the operations according to the second and third conditions described above by analyzing the feedback signal transmitted from the wireless power receiver and received through the transmission coil group 136.

As a fourth condition, it is checked whether the temperature of the wireless power transmitter is within an upper limit threshold range. For example, the upper limit threshold range may be between 65° and 75°, but embodiments are not limited thereto.

To this end, a temperature measurement unit 166 may be further provided. The temperature measurement unit 166 may measure the temperature of the wireless power transmitter 100 and output the result of measurement to the transmission controller 140. For example, the temperature measurement unit 166 may be implemented as a thermistor, but embodiments are not limited thereto. Accordingly, the transmission controller 140 checks whether the temperature of the wireless power transmitter 100 measured by the temperature measurement unit 166 is maintained within the upper limit threshold range for a predetermined time, and then check whether the wireless power receiver is performing charging in the no-load state, according to the result of the checking.

Upon determining using the various methods described above that the wireless power receiver is performing charging in the no-load state without completing charging, the transmission controller 140 may temporarily interrupt supply of the power signal to the wireless power receiver, and then resume the supply of the power signal. Here, the period during which supply of the power signal to the wireless power receiver is temporarily interrupted may be a period of time required to lower the temperature of the wireless power receiver, particularly, the charging object, by about several degrees Celsius, for example, about 2°C. For example, the temporary interruption period may be 10 minutes, but embodiments are not limited thereto.

In addition, the operation of temporarily interrupting and then resuming supply of the power signal to the wireless power receiver by the wireless power transmitter 100 under the control of the transmission controller 140 may be repeated a plurality of times. Here, the number of repetitions may be about 2, but embodiments are not limited to a specific number of repetitions.

In order to temporarily interrupt supply of the power signal, the transmission controller 140 may block the power source unit 110 from providing power to the power conversion unit 120, or block the amplifier 126 from outputting an amplified power signal. However, embodiments are not limited to the specific scheme of interrupting supply of a power signal.

Hereinafter, the wireless power receiver 200 receiving power from the wireless power transmitter 100 according to the above-described embodiment will be described with reference to the accompanying drawings.

FIG. 5 is a block diagram illustrating a wireless power receiver 200 capable of receiving power from the wireless power transmitter 100 according to FIG. 4. For ease of understanding, flow of power (or a power signal) is indicated by a solid line and flows of a control signal and a state signal other than the power are indicated by a dotted line.

Referring to FIG. 5, the wireless power receiver 200 may include a reception coil 210, a rectification unit 220, a voltage controller 230, a reception controller 240, a modulation unit 250, and a charging object (or load) 260.

The reception coil 200 may include a secondary coil capable of constituting a resonant circuit. In order to enhance power transmission efficiency, a capacitor may be connected to the reception coil 200 in series or in parallel. In transmitting power from the wireless power transmitter 100 to the wireless power receiver 200 according to the electromagnetic induction scheme, the reception coil 200 may be coupled to a "corresponding transmission coil" in the transmission coil group 136 by the electromagnetic field.

The rectification unit 220 performs full-wave rectification of an AC power signal input through the reception coil 200 and outputs a result of full-wave rectification to the voltage controller 230.

The voltage controller 230 converts the result of full-wave rectification output from the rectification unit 220 into a DC power signal of a level at which the charging object 260 is chargeable. The voltage controller 230 may adjust the voltage magnitude or the amount of current of the DC power signal in accordance with the voltage level required by the charging object 260 or in accordance with the state of the charging object 230. For example, the voltage controller 230 may be a DC/DC converter, but embodiments are not limited thereto.

The reception controller 240 monitors the charging object 260 to control the charging process and operates the modulation unit 250 to communicate with the wireless power transmitter 100. In addition, the reception controller 240 may monitor and control a subsidiary operation environment required for normal operation of the wireless power receiver 200.

The reception controller 240 may control the rectification unit 220 or the voltage controller 230 to cause the wireless power receiver 200 to perform charging in the no-load state, such that power is not supplied to the charging object 260 when charging of the charging object 260 is completed. At this time, the reception controller 240 may transmit a feedback signal containing charging completion information indicating completion of charging to the wireless power transmitter 100 via the modulation unit 250.

Even when the charging object 260 is not completely charged, the reception controller 240 may control the rectification unit 220 or the voltage controller 230 to interrupt supply of the power signal to the charging object 260 to allow the wireless power receiver 200 to proceed with charging in the no-load state if the temperature of the charging object 260 is high.

The reception controller 240 may generate a feedback signal containing information on at least one of charging completion, charge rate, or charging time of the charging object 260, and output the generated feedback signal to the modulation unit 250. As described above, the feedback signal may contain information about the state of the charging process or the result of charging of the wireless power receiver 200.

The modulation unit 250 typically includes a resistor and a capacitor and functions to modulate a feedback signal generated by the reception controller 240 and transmitted to the wireless power transmitter 100 through the reception coil 210.

Hereinafter, a wireless power transmission method implemented by the wireless power transmitter 100 will be described with reference to the accompanying drawings.

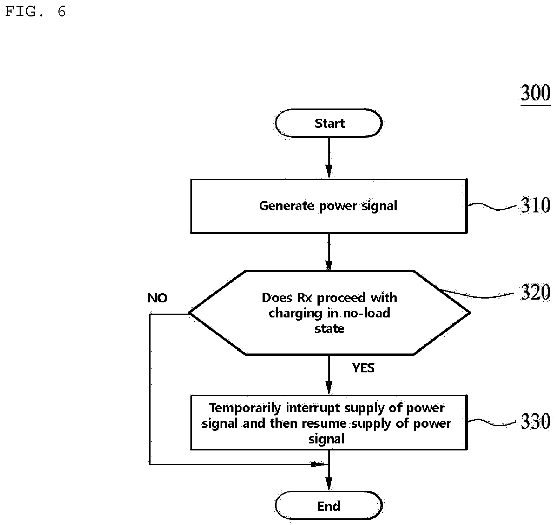

FIG. 6 is a flowchart illustrating a wireless power transmission method according to an embodiment.

The wireless power transmission method illustrated in FIG. 6 may be implemented by the wireless power transmitter 100 shown in FIG. 3, which wirelessly supplies power to the wireless power receiver 200 shown in FIG. 5.

First, the wireless power transmitter 100 generates a power signal by converting an intensity of supplied power (operation 310). Operation 310 may be performed by the power conversion unit 120 shown in FIG. 3, as described above.

Thereafter, it is determined whether the wireless power receiver (Rx) 200 proceeds with charging in the no-load state without completing charging (operation 320). Operation 320 may be performed by the transmission controller 140. That is, as described above, when at least two of the four conditions are satisfied, the transmission controller 140 may determine that the wireless power receiver 200 proceeds with charging in the no-load state without completing charging.

Additionally, in order to perform operation 320, the wireless power transmitter 100 may check whether the coil current is greater than the rail current, check whether the charge rate of the wireless power receiver 200 is kept constant for a first predetermined time, check whether the charging completion signal has not been received from the wireless power receiver 200 for a second predetermined time, and check whether the temperature of the wireless power transmitter 100 is maintained within an upper limit threshold range for a certain time.

For example, the wireless power transmitter 100 may determine that the wireless power receiver 200 proceeds with charging in the no-load state without completing charging if the first condition that the coil current is larger than the rail current and the third condition that the charge completion signal has not been received for the second predetermined time, for example, several hours. However, embodiments are not limited thereto.

It may also be determined that the wireless power receiver 200 proceeds with charging in the no-load state without completing charging, when a combination of at least two of the four conditions described above are satisfied.

Upon determining that the wireless power receiver 200 proceeds with charging in the no-load state without completing charging, the operation of temporarily interrupting and then resuming supply of the power signal may be performed at least once (operation 330). Operation 330 may be performed by the transmission controller 140. That is, when at least two of the four conditions described above are satisfied, the transmission controller 140 may control the power source unit 110 or the amplifier 126 to temporarily interrupt or resume transmission of the power signal to the transmission coil group 136.

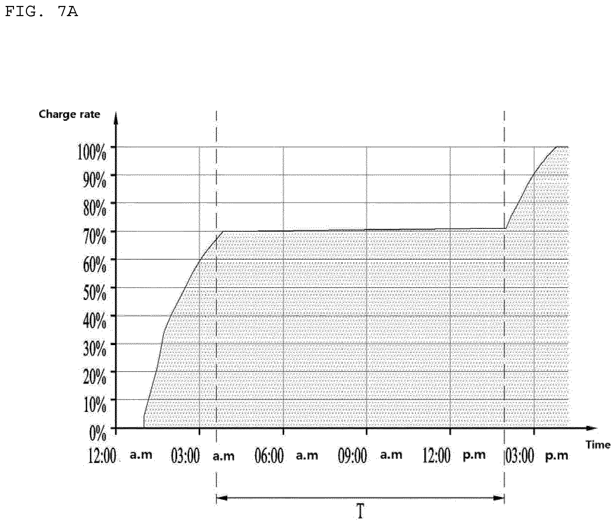

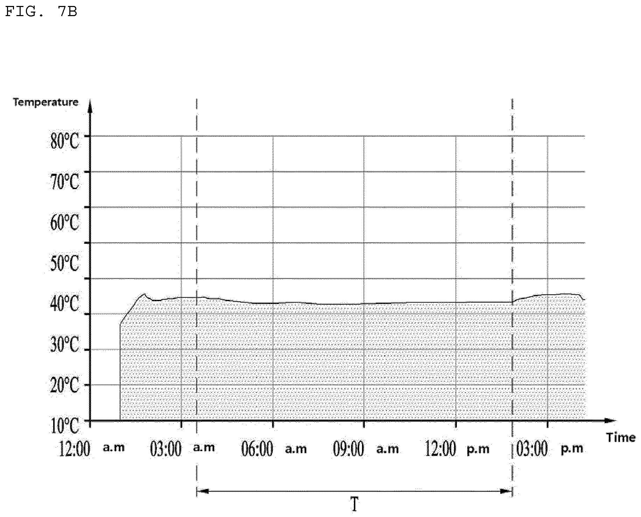

FIGs. 7A and 7B are graphs depicting a control operation of a wireless power transmitter according to a comparative example when the wireless power receiver 200 proceeds with charging in a no-load state without completing charging.

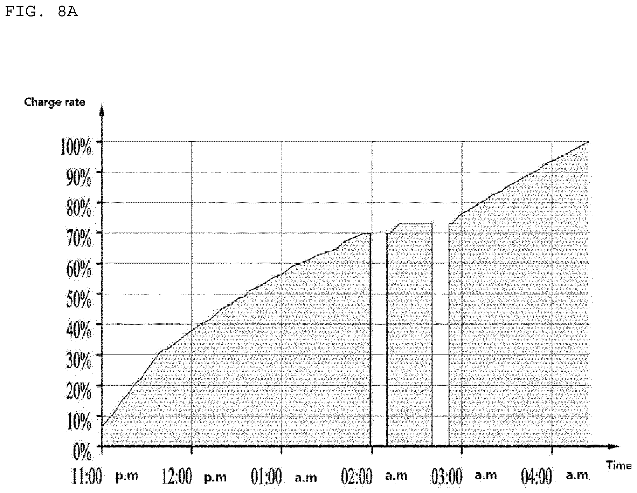

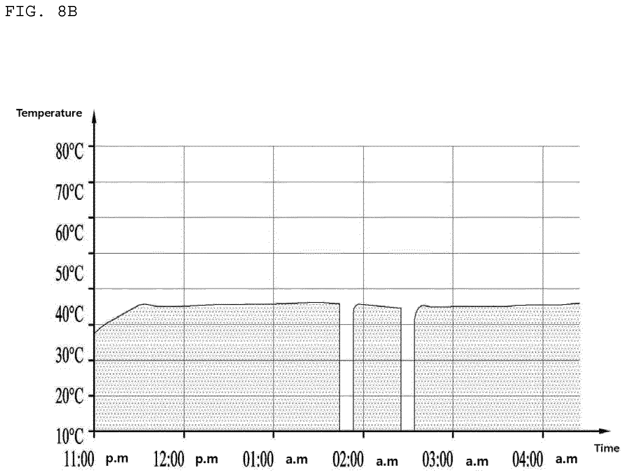

FIGs. 8A and 8B are graphs depicting a control operation of a wireless power transmitter 100 according to an embodiment when the wireless power receiver 200 proceeds with charging in a no-load state without completing charging.

In FIGs. 7A and 8A, the vertical axis represents the charge rate, and the horizontal axis represents time. In FIGs. 7B and 8B, the vertical axis represents temperature and the horizontal axis represents time.

As shown in FIG. 7A, if the temperature of the charging object 260 exceeds a certain temperature while the wireless power receiver 200 is charged 70% and charging thereof is completed, the wireless power receiver will proceed with charging in the no-load state in which supply of power is interrupted.

In this case, according to the comparative example, the wireless power transmitter has not received a charging completion signal from the wireless power receiver 200. Further, the wireless power transmitter recognizes that the wireless power receiver 200 continues to be charged with low power. Thus, the wireless power transmitter continues to supply power to the wireless power receiver 200. Accordingly, while the charge rate of the wireless power receiver 200 does not increase, namely the charging object 260 of the wireless power receiver 200 is not charged with power, power may be unnecessarily consumed for a long time T, for example, for 10 hours or more, and the temperature of the wireless power receiver 200 may be increased.

However, according to an embodiment, even if the wireless power transmitter 100 does not receive the charging completion signal from the wireless power receiver 200, the transmission controller 140 checks whether at least two of the four conditions described above, namely, the first condition that the coil current is larger than the rail current, the second condition that the charge rate of the wireless power receiver 200 is kept constant for the first predetermined time, the third condition that the charging completion signal is not received from the wireless power receiver 200 for the second predetermined time, or the fourth condition that the temperature of the wireless power receiver 200 is maintained within the upper limit threshold range for a certain time, are satisfied. If at least two conditions are satisfied, the transmission controller 140 repeats the operation of temporarily interrupting and then resuming supply of power to the wireless power receiver 200 at least once, for example, twice or so. Therefore, as supply of power is temporarily interrupted, the temperature of the wireless power receiver 200, particularly the charging object 260, may drop by several degrees Celsius. Accordingly, the charging time of the wireless power receiver 200 may be considerably shortened, as shown in FIG. 8A, compared to the comparative example of FIG. 7A, and unnecessary power consumption may be reduced.

Description of the wireless power transmitter, the wireless power receiver, and the wireless power transmission method according to the above-described embodiments have been limited to the case where power is wirelessly transmitted from the wireless power transmitter to the wireless power receiver according to the magnetic induction scheme. However, embodiments are not limited thereto. In other words, the wireless power transmitter, the wireless power receiver, and the wireless power transmission method according to the above-described embodiments may also be applied to a case where power is wirelessly transmitted from the wireless power transmitter to the wireless power receiver according to the magnetic resonance scheme or the RF transmission scheme using a short wavelength radio frequency in place of the magnetic induction scheme.

The wireless power transmission method according to the embodiments described above may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the methods described above may be easily inferred by programmers in the art to which the embodiments pertain.

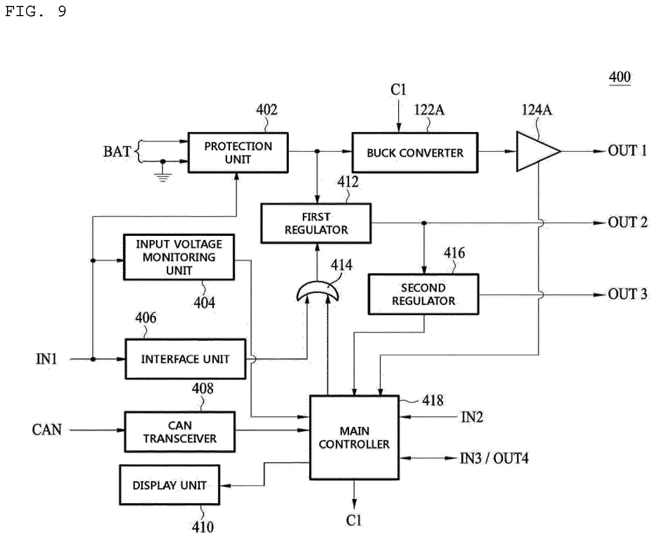

The wireless power transmitter 100 according to the embodiments described above may be included in various devices and wirelessly transmit power to the wireless power receiver 200. Hereinafter, the configuration and operation of a vehicle associated with the wireless power transmitter 100 when the wireless power transmitter 100 is applied (or mounted) to the vehicle will be described with reference to FIG. 9.

FIG. 9 is a schematic block diagram illustrating a vehicle 400 associated with the wireless power transmitter 100 according to an embodiment.

The vehicle 400 shown in FIG. 9 may include a buck converter 122A, a sensor 124A, a protection unit 402, an input voltage monitoring unit 404, an interface unit 406, a CAN (Controller Area Network) transceiver 408, a display unit 410, a first regulator 412, a signal synthesis unit 414, a second regulator 416, and a main controller 418.

The protection unit 402 outputs a voltage BAT supplied from the battery (not shown) of the vehicle 400 to the buck converter 122A. At this time, the protection unit 402 functions to protect the buck converter 122A from overvoltage or reverse voltage that may be supplied from the battery.

The buck converter 122A and the sensor 124A shown in FIG. 9 correspond to an embodiment of the level conversion unit 122 and an embodiment of the power sensor 124 shown in FIG. 3, respectively. The buck converter 122A converts the level of the power supplied from the battery through the protection unit 402 and outputs a signal having the converted level as a power signal to the sensor 124A. The sensor 124A may measure the voltage/current of the power signal output with the level converted by the buck converter 122A and provide the same to the transmission controller 140 via an output terminal OUT1.

The input voltage monitoring unit 404 monitors whether a smart key signal or an ignition signal is input through the input terminal IN1 and outputs the result of monitoring to the main controller 418. Here, the smart key signal means a signal generated by a smart key (not shown) by a user who intends to forcibly stop the operation of the wireless power transmitter 100 of the vehicle 400 wirelessly transmitting a power signal to the wireless power receiver 200. For example, if the wireless power signal is to be forcibly interrupted, a smart key signal of a first logic level (e.g., logic level "LOW") may be generated. Otherwise, a smart key signal of a second logic level (e.g., logic level "HIGH") may be generated. The ignition signal means a signal generated when the vehicle 400 is started. For example, an ignition signal of the second logic level (e.g., logic level "HIGH") may be generated when the vehicle is started. Otherwise, an ignition signal of the first logic level (e.g., logic level "LOW") may be generated.

In addition, using the result of monitoring generated by the input voltage monitoring unit 404, the main controller 418 recognizes whether the vehicle has been started and whether the user intends to forcibly stop wireless power transmission, and outputs the result of recognition to the transmission controller 140 via an output terminal OUT4. Then, the transmission controller 140 causes the wireless transmitter 100 to stop wireless power transmission according to the result of recognition output from the main controller 418.

The main controller 418 serves as a master controller, and the transmission controller 140 serves as a slave controller. That is, the transmission controller 140 is controlled by the main controller 418. To this end, the main controller 418 and the transmission controller 140 may perform SPI (Serial Peripheral Interface) communication or I2C communication with each other.

The main controller 418 may generate a signal of the second logic level and output the generated signal to the signal synthesis unit 414 even when the smart key signal or the ignition signal is not generated.

Upon determining, through the level of the voltage/current measured by the sensor 124A, that the level of the supplied power level-converted by the buck converter 122A is high or low, the main controller 418 may adjust, through a first control signal C1, the level to be converted by the buck converter 122A.

The interface unit 406 functions to output the smart key signal or the ignition signal input via the input terminal IN1 to the signal synthesis unit 414. When a smart key signal of the second logic level is output from the interface unit 406 or a control signal of the second logic level is input from the main controller 418, the signal synthesis unit 414 may prevent the first regulator 412 from performing level adjustment or outputting a level-adjusted voltage. To this end, the signal synthesis unit 414 may be implemented as an OR gate.

The first regulator 412 converts the level of the supplied voltage provided from the battery through the protection unit 402 into a predetermined level and supplies the supplied voltage having the converted level to each part of the wireless power transmitter 100 via the output terminal OUT2. Here, the predetermined level may be 6.5 volts, but embodiments are not limited thereto. For example, in response to the control voltage of the logic level "HIGH" output from the signal synthesis unit 414, the first regulator 412 may not perform the level conversion operation described above.

The second regulator 416 adjusts the level of the supplied voltage output from the first regulator 412 again and outputs a signal having a desired level to the transmission controller 140 or the main controller 418 via the output terminal OUT3. For example, the second regulator 416 may convert the level of the supplied voltage to output a signal of a converted level, for example, a signal of 5.5 volts to the main controller 418 and to output a signal of a converted level, for example, a signal of 3.3 volts to the transmission controller 140 via the output terminal OUT3.

The levels converted by each of the first and second regulators 412 and 416 may be fixed, and the level converted by the buck converter 122A may be varied under control of the main controller 418.

The CAN transceiver 408 may receive a CAN signal for communication with the vehicle 400, and internally communicate with the main controller 418 through the CAN signal.

The display unit 410 may visually show the user the state of charging in the wireless power receiver 200 under control of the main controller 418.

It is apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

## Claims

1. A wireless power transmitter for wirelessly transmitting a power signal to a wireless power receiver, comprising:
a power conversion unit configured to convert an intensity of a supplied power and output the power as the power signal;
a transmission controller configured to check whether the wireless power receiver proceeds with charging in a no-load state without completing the charging and to temporarily interrupt and then resume supply of the power signal to the wireless power receiver according to a result of the checking; and
a transmission coil group having at least one transmission coil configured to transmit the power signal to the wireless power receiver.

2. The wireless power transmitter according to claim 1, wherein the wireless power transmitter repeats the operation of temporarily interrupting and then resuming the supply of the power signal to the wireless power receiver a plurality of times under control of the transmission controller.

3. The wireless power transmitter according to claim 1, further comprising:
a frequency driver; and
a demodulation unit configured to demodulate a feedback signal transmitted from the wireless power receiver and received through the transmission coil group,
wherein the transmission controller controls the frequency driver according to the feedback signal demodulated by the demodulation unit to change a frequency of the power signal to be transferred to the transmission coil group.

4. The wireless power transmitter according to claim 3, wherein the power conversion unit comprises:
a level conversion unit configured to convert a level of the supplied power; and
a power sensor configured to measure a voltage/current of the supplied power having the converted level,
wherein the transmission controller interrupts supply of the supplied power to the level conversion unit according to a result of the measurement by the power sensor.

5. The wireless power transmitter according to claim 4, further comprising:
a first sensor configured to measure a level of a rail current flowing from the level conversion unit to the power sensor;
a second sensor configured to measure a level of a coil current flowing through a transmission coil wirelessly connected to the wireless power receiver in the transmission coil group; and
a comparison unit configured to compare results of the measurement performed by the first and second sensors,
wherein the transmission controller checks whether the wireless power receiver proceeds with the charging in the no-load state, using a result of the comparison performed the comparison unit.

6. The wireless power transmitter according to claim 5, wherein the transmission controller analyzes the demodulated feedback signal to determine at least one of whether a charge rate lower than full charge of the wireless power receiver is kept constant for a first predetermined time or whether a charging completion signal is not received from the wireless power receiver for a second predetermined time, and checks whether the wireless power receiver proceeds with the charging in the no-load state, using a result of the determination.

7. The wireless power transmitter according to claim 5, further comprising:
a temperature measurement unit configured to measure a temperature of the wireless power transmitter,
wherein the transmission controller checks whether the temperature measured by the temperature measurement unit is maintained within an upper limit threshold range for a predetermined time and checks whether the wireless power receiver proceeds with the charging in the no-load state according to a result of the checking.

8. The wireless power receiver according to any one of claims 1 to 7 for wirelessly receiving a power signal from a wireless power transmitter, the wireless power receiver comprising:
a reception coil coupled to a corresponding transmission coil in the transmission coil group by an electromagnetic field;
a modulation unit configured to modulate the feedback signal to be transmitted to the wireless power transmitter via the reception coil;
a rectification unit configured to rectify the power signal received via the reception coil and provide the rectified power signal to a charging object; and
a reception controller configured to control the rectification unit to interrupt supply of the power signal to the charging object to proceed with charging in the no-load state when a temperature of the charging object is higher than a temperature limit and to generate the feedback signal.

9. The wireless power receiver according to claim 8, wherein the reception controller generates the feedback signal containing information about at least one of a charge rate of the charging object, a required time for charging, or whether the charging is completed.

10. A method of wirelessly transmitting power from a wireless power transmitter to a wireless power receiver, the method comprising:
converting an intensity of a supplied power and generating a power signal; and
temporarily interrupting and then resuming supply of the power signal when the wireless power receiver proceeds with charging in a no-load state without completing the charging.

11. The method according to claim 10, wherein checking of whether the charging is performed in the no-load state comprises:
determining that the wireless power receiver proceeds with the charging in the no-load state when at least two conditions are satisfied among:
a condition that a coil current is larger than a rail current;
a condition that a charge rate lower than full charge of the wireless power receiver is kept constant for a first predetermined time;
a condition that a charging completion signal is not received from the wireless power receiver for a second predetermined time; or
a condition that a temperature of the wireless power transmitter is maintained within an upper limit threshold range for a predetermined time.

12. The method according to claim 11, wherein, when the coil current is larger than the rail current and the charging completion signal is not received for at least several hours, it is determined that the wireless power receiver proceeds with the charging in the no-load state without completing the charging.

13. The method according to claim 11, wherein the upper limit threshold range of the temperature of the wireless power transmitter is between 65° and 75°.

14. A computer-readable recording medium having recorded thereon a program for executing the method according to any one of claims 10 to 13.
